# EUROPÄISCHE PATENTSCHRIFT

(11) **EP 1 065 935 B1**
(45) Veröffentlichungstag und Bekanntmachung des Hinweises auf die Patenterteilung: **22.10.2003**
(21) Anmeldenummer: 99915660.7
(22) Anmeldetag: 18.03.1999
(51) Int. Cl.: A21D 8/04

(54) **VERFAHREN ZUR AUFBEREITUNG UND VERWENDUNG VON B-STÄRKE**
METHOD FOR PREPARING AND USING B-STARCH
PROCEDE DE PREPARATION ET D'UTILISATION D'AMIDON B

(30) Priorität: 21.03.1998 DE 19812511
(43) Veröffentlichungstag der Anmeldung: 10.01.2001
(73) Patentinhaber: PFEIFER & LANGEN, 50933 Köln (DE); Dairy Products Supply, 7812 HZ Emmen (NL)
(72) Erfinder: LUDOVICI, Karl, D-51427 Bergisch Gladbach (DE); BUINING, Jan, NL-7854 RW Aalden (NL)
(74) Vertreter: Werner, Hans-Karsten, Dr.Dipl.-Chem.
(86) Internationale Anmeldenummer: EP9901812
(87) Internationale Veröffentlichungsnummer: WO99048383

(56) Entgegenhaltungen:
- EP-A- 0 231 729
- GB-A- 465 884

## Beschreibung

B-Stärke entsteht in erheblichen Mengen bei dem herkömmlichen Mehlverarbeitungsprozeß in Stärke- bzw. Glucosefabriken, indem das Mehl mit Wasser zu einem Teig von 25 bis 40% Trockensubstanz vermischt und nach einer Reifezeit durch Separation in seine Bestandteile aufgetrennt wird; vgl. G. Tegge, "Stärke und Stärkederivate", Behr Verlag, 1984.

Dabei läßt sich die spezifisch schwerste Phase des Teiges, die sogenannte A-Stärke durch Dekantieren aus dem Teig abtrennen, in Drehsieben von Faserteilen reinigen und in Hydrozyklonen waschen.

Der spezifisch leichtere Kleber fällt in agglomerierter Form als weitere Phase des Teiges an und wird nach der Abtrennung der A-Stärke beispielsweise durch Bogensiebe abgetrennt oder aber auch schon vor Abtrennung der A-Stärke durch Dekantation in Extrakteuren aus dem Teig entfernt. Bekannt ist auch die gleichzeitige Abtrennung von A-Stärke und Kleber in dreiphasigen Dekantern.

Die dritte Phase des Teiges nach Abtrennung von A-Stärke und Kleber beinhaltet neben der sogenannten B-Stärke die löslichen Bestandteile des Mehls, nämlich Albumine, Globuline, Pentosane, Asche, lösliche Kohlenhydrate etc. Die B-Stärke besteht mikroskopisch betrachtet aus Konglomeraten von meist kleineren Stärkekörnern mit Proteinen, Hemicellulosen, Fasern und ähnlichen. Die B-Stärke besitzt daher ein im Vergleich zur A-Stärke geringeres spezifisches Gewicht.

Die B-Stärke ist bisher in verschiedener Weise aufgearbeitet worden. So wird sie oftmals nach dem Entwässern auf Walzentrocknern zu sogenanntem Stärke-Quellmehl verarbeitet, welches als Futterkomponente oder preiswertes Verdickungsmittel verwendet wird. Wird die B-Stärke vor der Trocknung durch Separation entwässert, gehen die löslichen Bestandteile des Mehls mit dem Abwasserstrom verloren.

Eine weitere Möglichkeit der Verwertung der B-Stärke ist die vollständige enzymatische Verzuckerung der enthaltenen Stärkeanteile zu Glucose und anschließende Konzentration durch Eindampfung. Dabei entstehen durch Maillard-Reaktion dunkelbraun gefärbte Sirupe, die sich wiederum als Rohstoff für unterschiedlichste Fermentationsverfahren oder als Bindemittel eignen. Eine Möglichkeit dieses Aufschlusses ist die direkte Vergärung zu Alkohol.

Es ist auch schon versucht worden, die B-Stärke- enzymatisch oder chemisch so zu behandeln, daß eine möglichst reine Stärkefraktion abgetrennt werden kann. So wird beispielsweise durch Hemicellulosen, Proteinasen oder Natronlauge ein Teil der B-Stärke-Konglomerate aufgespalten, so daß reine Stärkekörner freigesetzt werden und die Viskosität der dritten Phase der Teigtrennung herabgesetzt wird. Die Stärkekörner können aufgrund ihres höheren spezifischen Gewichts und der herabgesetzten Umgebungsviskosität wiederum durch Separation abgetrennt werden. Die dabei gewonnene Stärkefraktion kann wegen ihrer relativ hohen Reinheit für bestimmte Weiterverarbeitungszwecke mit der A-Stärke vereint werden. Es wird somit die Ausbeute an A-Stärke erhöht. Die in der so entstandenen zusätzlichen Stärke vorhandenen geringfügigen Verunreinigungen beeinträchtigen beispielsweise die Weiterverarbeitung zu Glucosesirup nicht oder Sehr wenig, indem sie z.B. einen erhöhten Raffinationsaufwand zur Folge haben.

Ein Nachteil dieser Verfahren ist die weitgehende Entwertung des Nichtstärke-Anteils der dritten Phase der Teigtrennung. Es entstehen Produkte, die einen so schlechten Geschmack aufweisen und so aschereich sind, daß sie nur' noch dem Schweinefutter zugemischt werden können oder an Futterkleie angetrocknet werden können. Der Nachteil sämtlicher bisher bekannten Verfahren besteht somit darin, daß erhebliche Anteile an sich wertvoller Bestandteile nur noch in minderwertiger Qualität anfallen und eigentlich nicht mehr verwertet, sondern entsorgt werden müssen.

Die Erfindung hat sich somit die Aufgabe gestellt, ein Verfahren zur enzymatischen Aufbereitung der dritten Phase der Teigtrennung zur Verfügung zu stellen, bei welchem möglichst alle Bestandteile der dritten Phase der Teigtrennung in hochwertiger und gut verwendbarer Qualität anfallen, so daß sie auch in ökonomisch und ökologisch wertvoller Form anfallen und nicht mehr entsorgt werden müssen.

Diese Aufgabe wird dadurch gelöst, daß die dritte Phase der Teigtrennung-enthaltend B-Stärke und die löslichen Mehlbestandteile nach der üblichen mechanischen Abtrennung der A-Stärke und des Klebers mit Amylasen und Hemicellulasen versetzt, unverzüglich auf Temperaturen von 55 bis 75°C, vorzugsweise 60 bis 70°C erhitzt und nach der Verzuckerung und partiellen Pentosanhydrolyse unverzüglich eingedampft wird.

Vorzugsweise wird das Verfahren so durchgeführt, daß die Menge der zugeführten Enzyme und die Reaktionsbedingungen so gewählt werden, daß ein ausgewogenes Verhältnis von Glucose, Dextrinen und Reststärke entsteht.

Weiterhin werden die Reaktionsbedingungen so gewählt, daß die Maillard-Reaktion so wenig wie möglich oder gar nicht eintritt.

Schließlich werden die Reaktionsbedingungen vorzugsweise so gewählt werden, daß die löslichen Proteine der dritten Phase der Teigtrennung nicht verändert werden und daß so wenig wie möglich mikrobielle Fermentation eintritt.

Die so erhaltenen Verfahrensprodukte sind verwendbar als teilweiser oder vollständiger Ersatz von Rohstoffen aus Magermilch oder pflanzlichen Kohlenhydraten in Tierfutter, insbesondere im Jungtierfutter, sowie in Lebensmitteln, insbesondere in sprühgetrockneten Produkten, Süßwaren oder Speiseeis.

Zur Durchführung des erfindungsgemäßen Verfahrens wird die dritte Phase der Teigtrennung enthaltend sowohl die B-Stärke als auch die löslichen Mehlbestandteile möglichst bald nach der Dekantation mit Amylasen und Hemicellulasen versetzt, und danach unverzüglich auf Temperaturen von 55 bis 75°, vorzugsweise 60 bis 70°C erhitzt. Gegebenenfalls wird vor dem Zusatz der Amylasen und Hemicellulasen oder vor dem Erhitzen der pH-Wert eingestellt, um einerseits den Aufschluß der B-Stärke durch die Amylasen und Hemicellulasen zu beschleunigen und andererseits mikrobielle Fermentation so weit wie möglich zu unterbinden. Weiterhin werden die Verfahrensbedingungen vorzugsweise so gewählt, daß die Braunfärbung durch die Maillard-Reaktion so wenig wie möglich eintritt. Dabei ist es auch möglich, die löslichen Proteine der dritten Phase der Teigtrennung nicht zu verändern und somit als wertvolle Bestandteile zu erhalten.

Die Erhitzung des Reaktionsansatzes kann entweder diskontinuierlich im Rührkessel oder kontinuierlich mit Direktdampf in einem Stärkeverflüssigungsjet mit nachgeschaltetem Rohrreaktor durchgeführt werden, wobei Verweilzeiten von 1 bis 1,5 Stunden sich als ausreichend und optimal erwiesen haben. Beide Verfahrensvarianten erlauben eine exakte Kontrolle der Verweilzeit, um eine kontrollierte Verzuckerung zu gewährleisten. Optimale Eigenschaften der erfindungsgemäß hergestellten Produkte entstehen, wenn ein ausgewogenes Verhältnis von Glucose zu Dextrinen entsteht. Zu hohe Glucoseanteile verursachen starke Farb- und Geschmacksbildung durch Maillardreaktion beim folgenden Eindampfschritt. Weiterhin bewirkt die freie Glucose eine Abnahme von Aminosäuren durch.die Maillard-Reaktion. Ein zu hoher Anteil an Dextrinen wiederum ist unerwünscht, da beispielsweise das Verdauungssystem von Jungkälbern so gut wie keine Amylase aufweist. Ein hoher Anteil an Dextrinen beeinträchtigt weiterhin das Eindampfen durch erhöhte Viskosität und Belagbildung.

Nach dem erfindungsgemäßen Erhitzen wird das Produkt vorzugsweise schonend auf einen Gehalt von 30 bis 50 Gew.-% Trockensubstanz eingedampft und/oder sprühgetrocknet. Auch dabei sind Temperaturen von mehr als 72°C zu vermeiden, um die Denaturierung löslicher Proteine zu unterdrücken. Kurze Verweilzeiten bei hohen Temperaturen unterdrücken die Braunfärbung durch die Maillard-Reaktion. Insbesondere durch äußerste Hygiene läßt sich mikrobiologische Kontamination verhindern und damit ein unerwünschter Abbau der wertvollen löslichen Proteine der dritten Phase der Teigtrennung und die Kontamination mit mikrobiellen Stoffwechselprodukten.

Die erfindungsgemäß hergestellten Produkte sind frei von Lactose und können daher in Tierfutter zur Anwendung kommen, welches nur wenig oder keine Lactose enthalten soll. Die Produkte enthalten je nach Verfahrensbedingungen 2 bis 10 Gew.-% Monosaccharide, 25 bis 50 Gew.-% Disaccharide, 2 bis 10 Gew.-% Trisaccharide und nur geringfügige Mengen zwischen 0 und 4% längerkettige Oligosaccharide.

Die erfindungsgemäß hergestellten Produkte können beispielsweise in Tierfutter und insbesondere in Jungtierfutter verwendet werden, teilweise als Ersatz von Produkten der Milchindustrie oder Eiweißquellen pflanzlicher Herkunft. So fällt in der Industrie entzuckerte Molke an, die aschereich aber kohlenhydratarm ist.

Erfindungsgemäß entstehen aschearme, kohlenhydratreiche Produkte mit wertvollen Eiweißbestandteilen. Gemische dieser beiden Produkte sind hervorragend geeignet für die Kälbermast. Derartige Gemische können somit anstelle von Magermilchpulver zur Anwendung kommen. Während die Molkeprodukte im allgemeinen 6,5 bis 20 Gew. -% Mineralien enthalten, enthalten die erfindungsgemäß hergestellten Produkte 1 bis 5 Gew.-% Mineralien bezogen auf die Trockensubstanz. Der Eiweißgehalt liegt zwischen 7 und 35%, wobei durch Erhalt dieser Proteine in möglichst nativem Zustand auch ihr Nährwert erhalten bleibt. Geruch, Geschmack und Farbe des so erhaltenen Tierfutters entsprechen höchsten Anforderungen.

Die erfindungsgemäß hergestellten Produkte sind weiterhin geeignet zum teilweisen oder vollständigen Ersatz von Milchrohstoffen in Lebensmitteln, insbesondere in sprühgetrockneten Produkten und Süßwaren. So kann beispielsweise in Speiseeis ein Teil des relativ teuren Magermilchpulvers ersetzt werden, wobei obendrein der Gehalt an Lactose vermindert wird. Dies vermindert die Neigung zum Auskristallisieren, so daß das Speiseeis sanfter ist. Gut geeignet sind die erfindungsgemäß hergestellten Produkte auch zur Herstellung von Karamel, Füllung von Schokoladeriegeln etc., in denen bereits demineralisierte Molke verwendet wird. Der relativ hohe Aschegehalt in Molke beeinflußt nämlich den Geschmack negativ. Nicht demineralisierte Molke kann.ein Gemisch zusammen mit den erfindungsgemäß hergestellten Produkten gut eingesetzt werden. Gewünschtenfalls kann die Qualität der Produkte durch Zusatz von Emulgatoren und Fett weiter verbessert werden, wobei ebenfalls die guten Eigenschaften erhalten bleiben und Produkte entstehen, die bezüglich Geschmack, Geruch und Farbe als sehr hochwertig angesprochen werden können. Dies gilt auch für Futtermittel für andere Tiere wie Lämmer, Hunde, Katzen und sogar Fische.

## Patentansprüche

1. Verfahren zur enzymatischen Aufbereitung der dritten Phase der Teigtrennung enthaltend B-Stärke und die löslichen Mehlbetandteile, **dadurch gekennzeichnet, daß** die dritte Phase der Teigtrennung nach der üblichen mechanischen Abtrennung der A-Stärke und des Klebers mit Amylasen und Hemicellulasen versetzt, unverzüglich auf Temperaturen von 55 bis 75°C, vorzugsweise 60 bis 70°C erhitzt und nach der Verzuckerung und partiellen Pentosanhydrolyse unverzüglich eingedampft wird.

2. Verfahren gemäß Anspruch 1, **dadurch gekennzeichnet, daß** die Menge der zugeführten Enzyme und die Reaktionsbedingungen so gewählt werden, daß ein ausgewogenes Verhältnis von Glucose zu Dextrinen entsteht.

3. Verfahren gemäß Anspruch 1 oder 2, **dadurch gekennzeichnet, daß** die Reaktionsbedingungen so gewählt werden, daß die Maillard-Reaktion so wenig wie möglich eintritt.

4. Verfahren gemäß einem der Ansprüche 1 bis 3, **dadurch gekennzeichnet, daß** die Reaktionsbedingungen so gewählt werden, daß die löslichen Proteine der dritten Phase der Teigtrennung so wenig wie möglich verändert werden.

5. Verfahren gemäß einem der Ansprüche 1 bis 4, **dadurch gekennzeichnet, daß** die Reaktionsbedingungen so gewählt werden, daß so wenig wie möglich mikrobielle Fermentation eintritt.

6. Verfahren gemäß einem der Ansprüche 1 bis 5, **dadurch gekennzeichnet, daß** das Produkt die folgende typische Zusammensetzung bezogen auf Trockenmasse hat:
| | |
|---|---|
| Fett: | 1 bis 5 Gew.-% |
| Eiweiß: | 7 bis 35 Gew.-% (N x 6,25) |
| Kohlenhydrate: | 60 bis 80 Gew.-% |
| Mineralien: | 1 bis 5 Gew.-% |

7. Verwendung der enzymatisch aufbereiteten dritten Phase der Teigtrennung, herstellbar gemäß eine der Ansprüche 1 bis 6 als teilweiser oder vollständiger Ersatz von Milchrohstoffen oder pflanzlichen Kohlenhydraten in Tierfutter, insbesondere im Jungtierfutter, sowie in Lebensmitteln, insbesondere in sprühgetrockneten Produkten, Süßwaren und Speiseeis.

## Claims

1. A process for the enzymatic processing of the third phase of dough separation containing B-starch and the soluble flour components, **characterized in that**, after the usual mechanical separation of A starch and gluten, amylases and hemicellulases are added to the third phase of dough separation, the phase is immediately heated at temperatures of from 55 to 75 °C, preferably 60 to 70 °C, and immediately concentrated by evaporation following saccharification and pentosan partial hydrolysis.

2. The process according to claim 1, **characterized in that** the quantities of the added enzymes and the reaction conditions are selected to obtain a balanced ratio of glucose to dextrins.

3. The process according to claim 1 or 2, **characterized in that** the reaction conditions are selected such that the Maillard reaction occurs as little as possible.

4. The process according to any of claims 1 to 3, **characterized in that** the reaction conditions are selected such that the soluble proteins of the third phase of dough separation are altered as little as possible.

5. The process according to any of claims 1 to 4, **characterized in that** the reaction conditions are selected such that as little as possible microbial fermentation occurs.

6. The process according to any of claims 1 to 5, **characterized in that** the product has the following typical composition, based on the dry substance:
| | |
|---|---|
| lipids: | from 1% to 5% by weight; |
| proteins: | from 7% to 35% by weight (N x 6.25); |
| carbohydrates: | from 60 to 80% by weight; |
| minerals: | from 1 to 5% by weight. |

7. Use of the enzymatically processed third phase of dough separation, prepared according to any of claims 1 to 6, as a partial or complete substitute of dairy raw materials or vegetable carbohydrates in animal feeds, especially in feeds for young animals, and in food products, especially in spray-dried products, sweets and ices.

## Revendications

1. Procédé de traitement enzymatique de la troisième phase de la séparation de la pâte contenant l'amidon B et les composants solubles de la farine, **caractérisé en ce qu'**on ajoute à la troisième phase de la séparation de la pâte, après la séparation mécanique habituelle de l'amidon A et du gluten, des amylases et des hémicellulases, on chauffe l'ensemble immédiatement à des températures de 55 à 75° C, de préférence de 60 à 70° C, et on le concentre par évaporation immédiatement après la saccharification et l'hydrolyse partielle du pentosane.

2. Procédé selon la revendication 1, **caractérisé en ce qu'**on détermine la quantité d'enzyme à introduire et les conditions de la réaction de façon à obtenir un rapport bien proportionné du glucose aux dextrines.

3. Procédé selon la revendication 1 ou 2, **caractérisé en ce qu'**on détermine les conditions de réaction de manière à limiter le plus possible la formation de la réaction de Maillard.

4. Procédé selon une des revendications 1 à 3, **caractérisé en ce qu'**on détermine les conditions de réaction de manière à modifier le moins possible les protéines solubles de la troisième phase de la séparation de la pâte.

5. Procédé selon une des revendications 1 à 4, **caractérisé en ce qu'**on détermine les conditions de réaction de façon à limiter le plus possible la fermentation microbienne.

6. Procédé selon une des revendications 1 à 5, **caractérisé en ce que** le produit obtenu a la composition suivante type, rapportée à la masse sèche :
- lipides : 1 à 5 % en poids
- protides : 7 à 35 % en poids (N x 6,25)
- glucides : 60 à 80 % en poids
- minéraux : 1 à 5 % en poids.

7. Utilisation de la troisième phase de la séparation de la pâte traitée enzymatiquement, pouvant être préparée selon une des revendications de 1 à 6, en tant que produit de remplacement partiel ou complet des matières premières lactiques ou des glucides végétaux dans la nourriture animale, notamment dans la nourriture des jeunes animaux, ainsi que dans les denrées alimentaires, notamment dans les produits séchés par atomisation, la confiserie et la crème glacée.
